# EUROPEAN PATENT APPLICATION

(11) **EP 0 669 594 A2**
(43) Date of publication of application: **30.08.1995**
(21) Application number: 95101986.8
(22) Date of filing: 14.02.1995
(51) Int. Cl.: G06K 11/18, G06K 9/24

(54) **Writing device for detecting handwriting**

(30) Priority: 24.02.1994 JP 26551/94; 26.08.1994 JP 201632/94
(71) Applicant: YASHIMA ELECTRIC CO., Ltd., Kyoto-shi, Kyoto 601 (JP)
(72) Inventor: Taguchi, Toshio, c/o Yashima Electric Co., Ltd., Kyoto-shi, Kyoto 601 (JP); Hishiki, Ichiro, c/o Yashima Electric Co., Ltd., Kyoto-shi, Kyoto 601 (JP)
(74) Representative: Prüfer, Lutz H., Dipl.-Phys.

(57) **Abstract**

A writing device for detecting handwriting written by the device which device includes a case (1, 31, 41), which case (1, 31, 41) comprises a writing section (2, 32, 41 a) in which a marking element, lens system (11, 37, 45) and optical elements (12, 38, 45) are disposed, and a grasping section (3, 33) which is connected to the writing section (2, 32, 41 a) in an inclinable manner.

## Description

### Background of The Invention

The present invention relates to an arrangement for detecting handwriting or a handwriting medium and more particularly to an arrangement which detects handwriting on a medium simultaneously to the writing.

### Related Art

In recent years, pen input computing systems have developed wherein characters, figures and the like written on a medium for writing are detected at a contact locus thereof (hereinafter referred to as the handwriting locus) simultaneously to the writing. An optical writing device for detecting handwriting has also been developed which requires no digitizer or the like (please refer to "writing device for storing handwriting" Japanese patent laid open No. Tokukaihei 5-278390). Conventional art of such writing devices involves detecting handwriting which is being written on a paper, from an upper position of the paper using a lens, CCD area sensor or the like.

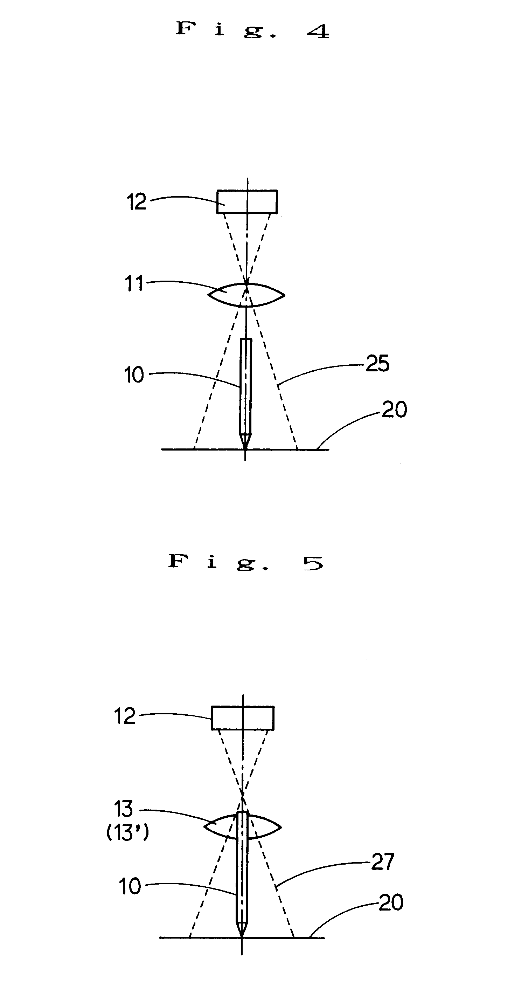

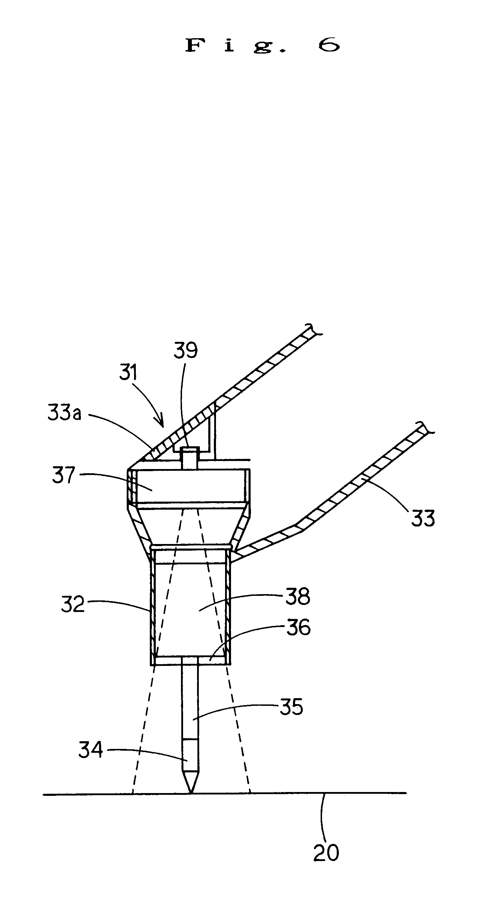

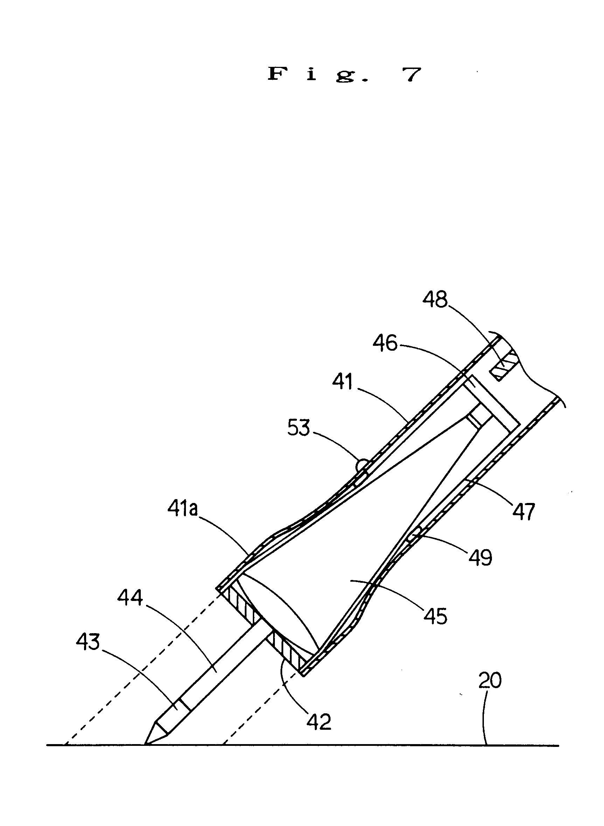

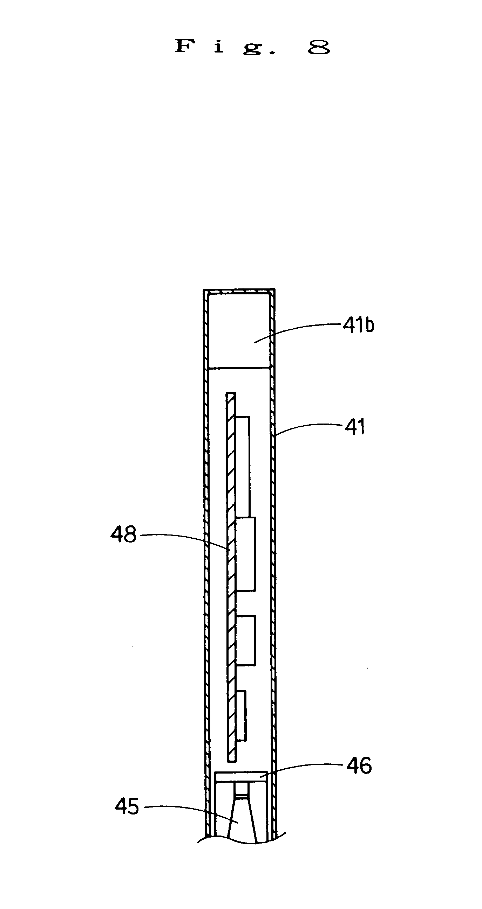

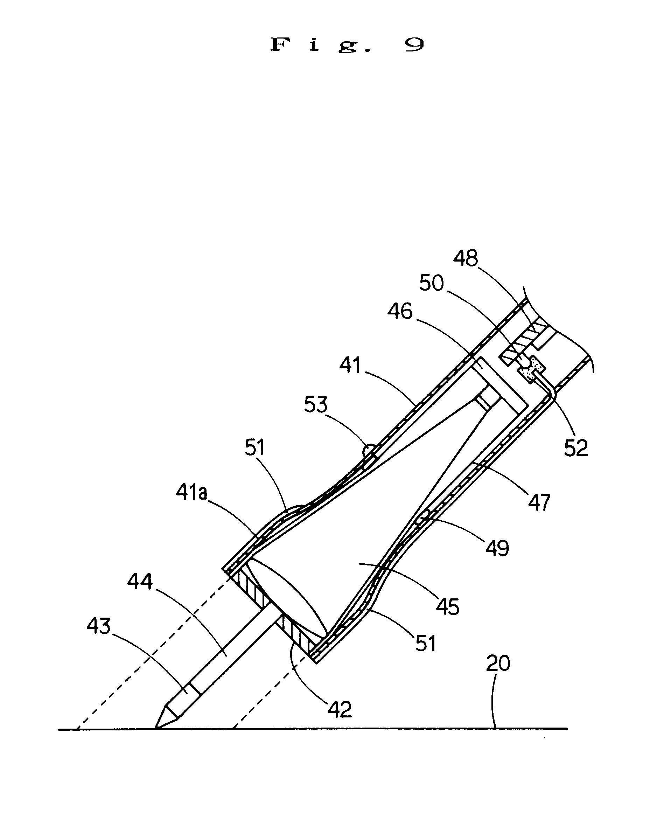

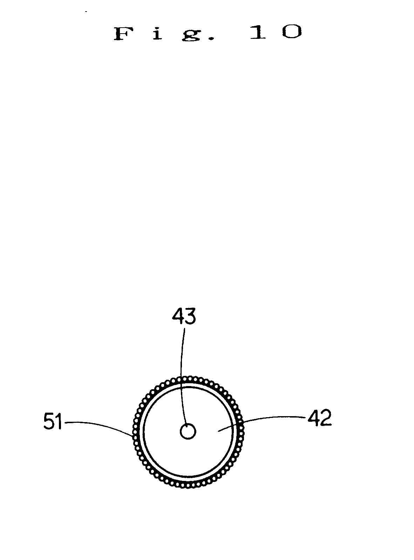

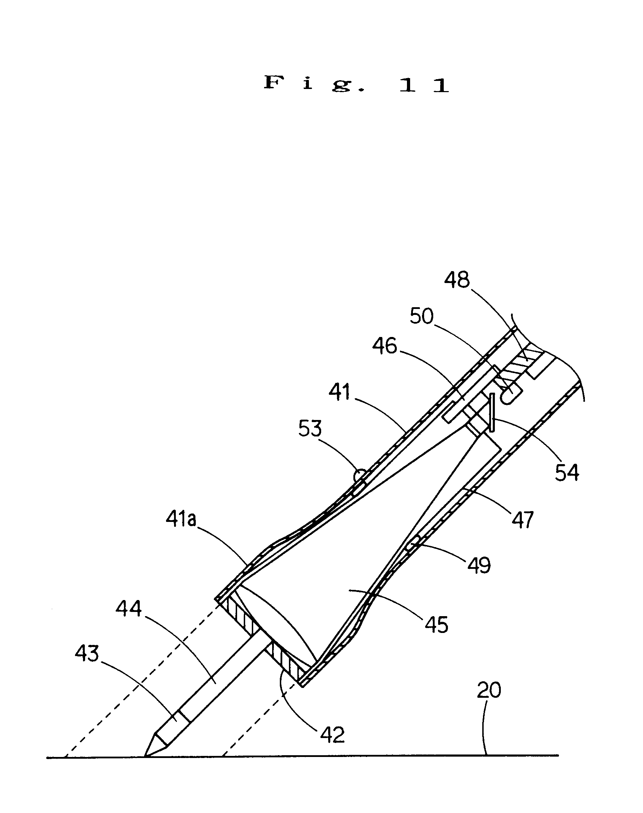

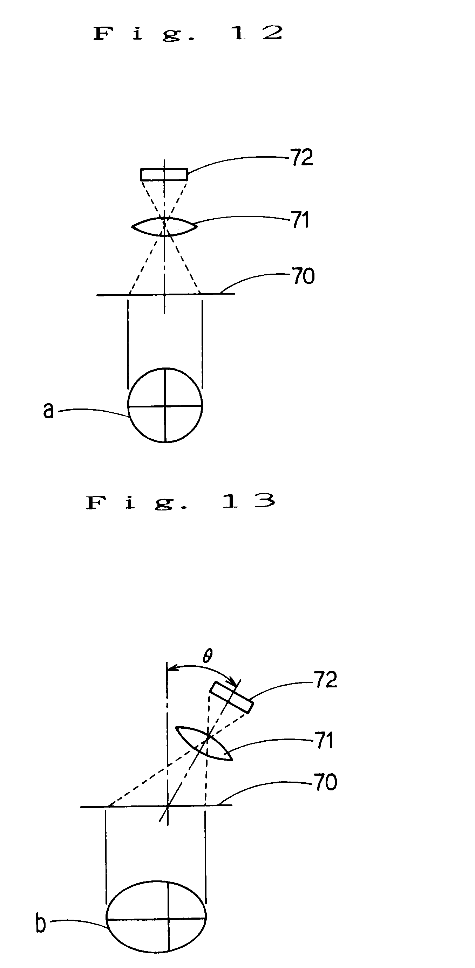

A writing device for the detection of handwriting having the above arrangement detects handwriting from the upper position of the paper. An optical lens has characteristic advantages and disadvantages which are different from these of the human eye. The disadvantages include image deformation. As is illustrated in Fig. 12, when a lens 71 and a CCD area sensor 72 are disposed on an optical axis with respect to the paper 70, that is an optical axis constituted by the lens 71 and the CCD area sensor 72 is vertical to the paper 70, and when a character " + written on the paper 70 is detected through the lens 71, for example, the image seen within a view extent (refer to a circle a in Fig. 12) of the lens 71 becomes an exact • + " the left portion of which is equal to the right portion, and the upper portion of which is equal to the lower portion.

But, in general, a writing device is rarely moved in a condition wherein the writing device is vertical to the paper 70. A right-handed person may hold the writing device with his thumb, forefinger and middle finger in a condition where the writing device is inclined so as to position its upper portion at a right and forward outerward position when using the writing device for writing. Therefore, an optical axis of an optical system is maintained in an inclined condition with respect to the paper 70 by an angle 0 from a vertical line which is perpendicular to the paper 70, as is illustrated in Fig. 13. In this case, though deformation extent varies depending upon the value of angle 0, the view extent of the lens 71 (refer to the oval b in Fig. 13) is deformed into an oval shape due to the deformation characteristic of the lens 71 which is one of the disadvantages of the lens 71. Therefore the detected image of the +" is not the image which is exactly reflected of the character • + on the paper 70.

In general, an image detected by the CCD area sensor 72 is different from handwriting on a paper due to a multiplication effect due to the deformation characteristic of the lens 71 and holding position of an individual using the writing device. These factors lead to problems which arise in post-processing of detected images, or the like, in a pen driven computing system.

### Summary of The Invention

It is an object of the present invention to provide a writing device for detecting handwriting which device detects the exact handwriting written on a medium regardless of differences between an individual's particular way of holding the device.

A writing device for detecting handwriting according to the present invention includes within a case, a writing means and a handwriting detection means for detecting handwritten characters, figures and the like written by the writing means. The case includes a writing section in which the writing means and the handwriting detection means are disposed, and a grasping section which is attached to the writing section in an inclinable manner.

When the writing device for detecting handwriting having the above arrangement is used, the writing section can be inclined with respect to the grasping section. A writer can grasp the writing device and write characters, figures and the like while maintaining the writing section in an orientation which is perpendicular to a writing surface or medium. Therefore, an inclination angle of the grasping section can be adjusted corresponding for a particular writer's writing posture, and a suitable posture for writing can easily be determined. Further, when the sections are adjusted, the lower section is positioned to maintain a vertical orientation with respect to the writing surface or medium so that characters, figures and the like written on the writing surface or medium can be accurately detected without the influence of deformation characteristic of a lens which is employed as the handwriting detection means. As a result, an image detected by the handwriting detection means is an image which is an accurate reflection of the handwriting.

Another writing device for detecting handwriting according to the present invention also includes within a case, a writing means and a handwriting detection means for detecting handwritten characters, figures and the like written by the writing means. The case includes a grasping section and a writing section in which the writing means and the handwriting detection means are disposed, the writing section being attached to the grasping section so that the writing section is perpendicular to a writing surface or medium.

When the writing device for detecting handwriting having the above arrangement is used, the writing section is supported so that the writing section is perpendicular to a writing surface or medium, wherein the writing section is always maintained to be perpendicular to a writing surface or medium when a writer grasps the grasping section and writes characters, figures or the like. Therefore, characters, figures and the like written on a writing surface or medium can be accurately detected without the influence of deformation characteristic of a lens employed in the handwriting detection means, similar to the above.

A further writing device for detecting handwriting according to the present invention which device also includes within a case, a writing means and a handwriting detection means for detecting handwritten characters, figures and the like written by the writing means.

In this arrangement the handwriting detection means includes one or more optical devices for detecting an image written on a writing surface or medium. The image being written on the writing surface by the writing means, is detected by a telecentric lens system which directs the image on the surface to the optical devices.

When the writing device for detecting handwriting having the above arrangement is used, the telecentric lens system can orient its main light path to be parallel to an optical axis in an object space or an image space by positioning an aperture diaphragm at a rear focal point in the image space or a front focal point in the object space, respectively. When an optical axis of the lens is maintained to be constant, a size of a viewfield will not vary even when a distance to an object is varied. When the writing means is inclined with respect to a surface of a writing medium, an image is varied and an enlargement magnitude in the inclination direction is equal to an enlargement magnitude in a direction which is opposite to the inclination direction.

Yet another writing device for detecting handwriting according to the present invention which device includes within a case, a writing means and a handwriting detection means for detecting handwritten characters, figures and the like written by the writing means, wherein the handwriting detection means includes a zoom means for varying an extent for detecting an image on a writing surface of a medium. The zoom means may be a zoom lens which has a characteristic of varying a size of a viewfield and of varying an enlargement magnitude.

When the writing device for detecting handwriting having the above arrangement is used, the extent of a detected image can be varied by varying the size of the viewfield by the zoom means. Therefore, an extent of a detected image can easily be determined to be a suitable extent.

A yet further writing device for detecting handwriting according to the present invention which deviced includes within a case, a writing means and a handwriting detection means for detecting handwritten characters, figures or the like written by the writing means comprises, a correction means for individual person for correcting a shifting of positional relationship between the handwriting detection means and a writing surface or medium.

When the writing device for detecting handwriting having the above arrangement is used, a shifting of positional relationship between the handwriting detection means and a writing surface or medium from a standard positional relationship can be corrected so that variation of shifting depending upon a writer can be eliminated.

Still another writing device for detecting handwriting according to the present invention which device includes within a case, a writing means and a handwriting detection means for detecting handwritten characters, figures or the like written by the writing means comprises, a grasping portion determining means for determining a positional relationship between the handwriting detection means and a writing surface or medium when a writer grasps the writing device.

When the writing device for detecting handwriting having the above arrangement is used, a positional relationship between the handwriting detection means and a writing surface or medium is uniformly determined.

A still further writing device for detecting handwriting according to the present invention which device includes within a case, a writing means and a handwriting detection means for detecting handwritten characters, figures or the like written by the writing means comprises, an illuminating means for illuminating a surface of a writing medium.

When the writing device for detecting handwriting having the above arrangement is used, an image in good condition can be detected.

The writing means may include any marking element suitable for writing on a writing surface or medium such as ball point pen with an oil base or water base color paint such as black, red, blue or the like, a pencil of any color, a propelling pencil, crayon, chalk, any ink of a various color, China ink, oil or water colors, paint or the like. The writing means may include various mechanisms such as an ink cartridge exchanging mechanism, pencil lead exchanging mechanism, drawing mechanism or the like.

### Brief Description of The Drawings

Figure 1 is a side view of a writing device for detecting handwriting according to a first embodiment;
Figure 2 is a side view, seen from another angle, of the writing device for detecting handwriting according to the first embodiment;
Figure 3 is a plan view of the writing device for detecting handwriting according to the first embodiment;
Figure 4 is a schematic diagram useful in understanding a disposition of a writing means and a handwriting detection means which are provided within a writing section of the writing device for detecting handwriting according to the first embodiment;
Figure 5 is a schematic diagram useful in understanding another disposition of a writing means and a handwriting detection means which are provided within a writing section of the writing device for detecting handwriting according to the first embodiment;
Figure 6 is a cross sectional view of a main portion of a writing section of a writing device for detecting handwriting according to a second embodiment;
Figure 7 is a cross sectional view of a main portion of a writing section of a writing device for detecting handwriting according to a third embodiment;
Figure 8 is a cross sectional view of a main portion of a portion except a writing section of the writing device for detecting handwriting according to the third embodiment;
Figure 9 is a cross sectional view of a main portion of a writing section of a modified writing device for detecting handwriting according to the third embodiment;
Figure 10 is a diagram of the writing device for detecting handwriting seen from the writing section side;
Figure 11 is a cross sectional view of a main portion of a writing section of a further modified writing device for detecting handwriting according to the third embodiment;
Figure 12 is a diagram useful in understanding a sample of handwriting image information obtained by a conventional writing device for detecting handwriting; and
Figure 13 is a diagram useful in understanding another sample of handwriting image information obtained by a conventional writing device for detecting handwriting.

### Detailed Description of The Preferred Embodiments

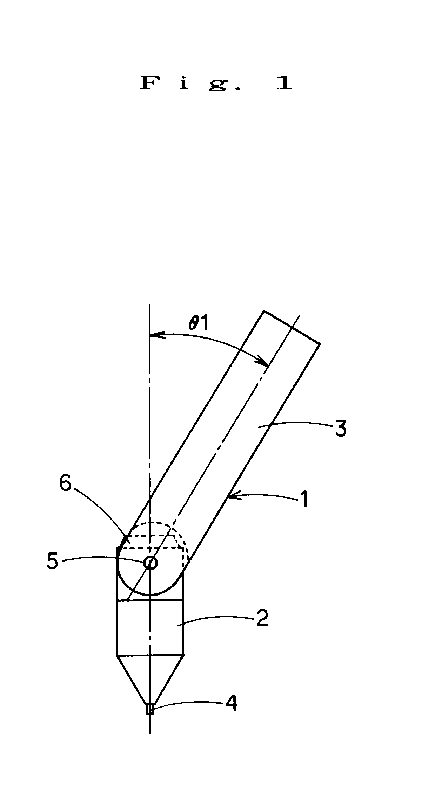

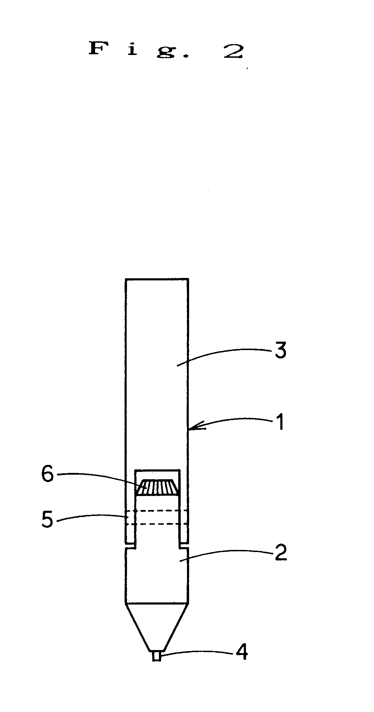

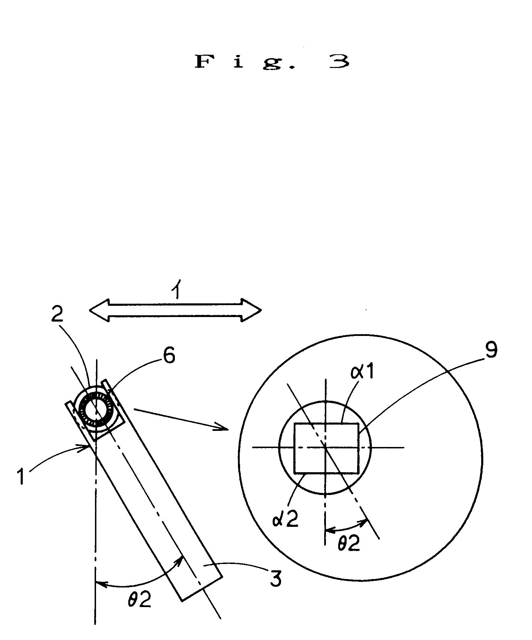

Figure 1 shows a side view of a writing device for detecting handwriting according to a first embodiment, figure 2 shows a side view seen from another direction, and figure 3 shows a plan view.

The writing device for detecting handwriting includes a case 1 which comprises a writing section 2 and a grasping section 3. The writing section 2 and the grasping section 3 may have a cylindrical shape. In the writing section 2, a writing implement such as ball point pen, or the like (not illustrated), is housed therein and the writing element 4 of the ball point pen is projected from an end portion of the writing section 2.

The grasping section 3 is connected to the writing section 2 by a rotation shaft 5. The grasping section 3 can be inclined relative to the writing section 2 by the rotation shaft 5 within an extent of angle of 81 with respect to a central axis of the writing section 2 (refer to Fig. 1). When a click and stop mechanism (not illustrated), is provided at an engaging portion of the writing section 2 and the grasping section 3, the grasping section 3 can be fixed at a desired angle 0 (inclination angle 01) for writing. When the writing device for detecting handwriting is to be carried or is not in use and/or is housed, the writing section 2 and the grasping section 3 are fixed to one another in a strait condition. Therefore, the arrangement is a preferable embodiment in view of confortability in usage..

Further, a printed circuit board (not illustrated) on which electrical circuits including LSI (large scale integration) or the like are mounted may be disposed within the grasping section 3. Handwriting signals detected by a handwriting detection section are sent to the electrical circuits. Also, a memory (storing means) for storing detected handwriting information, and a battery (power source) may be provided within the grasping section 3. The memory and battery may be provided to the case 1 in a removable manner. An external storage memory having a large storage capacity may be employed as the memory, and the external storage memory may be electrically connected to the writing device for detecting handwriting. A dry-battery, chargeable battery, or external power source (commercial power source) may be employed as the battery.

In the writing section 2, a handwriting detection section which comprises an optical system (lens system) and optical elements such as CCD area sensor, or the like, are housed. The CCD area sensor is not fixed to the writing section 2 in a fixed condition but is held in a rotatable manner around a central axis within an extent of rotating angle of 02 (refer to Fig. 3). The CCD area sensor is positioned on a plane which is perpendicular to a central axis which passes through the writing element 4 of the ball point pen, and a center of a light receiving window 9 of the CCD area sensor is coincident with the central axis.

Adjustment of the angle 02 of the CCD area sensor is performed by an angle adjusting knob 6 which is provided at an upper portion of the writing section 2. By operating the angle adjusting knob 6, the angle 02 with respect to the central axis of the writing section 2 is adjusted while the inclination angle e1 for easy writing with the grasping section 3. Further, on a surface of the angle adjusting knob 6, markings and the like are provided for easily judging and recognizing whether or not a moving direction of the writing device for detecting handwriting (refer to a thick arrow a in Fig. 3) and two edges a1 and a2 opposing one another of a rectangle of the light receiving window 9 (in general, the window has rectanglar shape) of the CCD area sensor. A straight line, or the like, is exemplified as the marking. The angle 02 of the CCD area sensor is adjusted by the angle adjusting knob 6 so that the straight line is parallel to the moving direction.

Disposition of the writing implement (the tip of the ball point pen) and the handwriting detection section {the lens system and the optical elements (CCD area sensor)} in the writing section 2 is described hereinafter. In Fig. 4, the lens system 11 (in Fig. 4, only one lens is illustrated, but the lens system may be comprised of plural lenses) and the CCD area sensor 12 are positioned on a central axis of the writing implement 10 which contacts vertically to the paper 20 for writing. That is, the center of the light receiving window of the CCD area sensor 12 is coincident with the central axis of the writing implement 10. The disposition does not vary because the writing section 2 is maintained to be perpendicular to the paper 20 during writing. Therefore, the deformation characteristic of the lens system 11 are accounted for, and handwritten characters, figures or the like, written on the paper 20 are not deformed within the extent of view 25 obtained by the lens system 11. Consequently, the image detected by the CCD area sensor 12 is accurately reflected from the handwriting on the paper 20(reffer to Fig.2).

The central portion of the view may be interfer- red by the writing implement 10 because the writing implement 10 is disposed to project downward in the center of the lens system 11 which has a view covering an area 25 (a moving extent from 1 to several characters with respect to the writing element 4 of the ball point pen) on the paper 20. But in actual practice, only a small black point is generated as a shadow of the writing implement 10 at a center of a screen in the handwriting image obtained by the CCD area sensor 12 when a wide angle lens system is employed as the lens system. The black point has a costant size and is constantly generated at the center of the image obtained by the CCD area sensor 12, Therefore the black point is easily and automatically eliminated using computer software, or the like, and the black point never becomes a barrier for handwriting detection. It is sufficient that computer software for autimatically eliminating the black point is loaded in a pen driven computing system, for example.

Fig. 5 is a schematic diagram useful in understanding another disposition example of an implement, a lens system and a CCD area sensor.

In this example, a super wide angle lens system 13 is employed, an opening having a proper diameter is provided at a center of an objective lens 13' which is positioned toward the paper 20 in the lens system 13. The writing implement 10 is inserted in the opening and the writing implement 10 is fixed to the objective lens 13' so that the lens system is disposed in close to the paper 20 for writing. The lens system obtains an area 27 which is similar to the area 25 illustrated in Fig. 4. By employing this arrangement, a distance between the paper 20 and the CCD area sensor 12 is shortened. Therefore, the size of the writing section 2 can be shortened in axial direction. The writing device for detecting handwriting is thus decreased in size and in weight.

The present invention is not limited to the above embodiment. Various modifications are applicable to the present invention. In the above embodiment, the grasping section 3 is described as connected to the writing section 2 with the rotation shaft 5 in an inclinable manner, but it is applicable that a screw or the like is employed and the grasping section 3 is adjusted in inclination by tightening or loosening the screw, or the like.

### Second Embodiment

Fig. 6 is a cross sectional view of a main portion of a writing section of a writing device for detecting handwriting according to a second embodiment.

The writing device for detecting handwriting includes a case 31, and the case 31 comprises a writing section 32 and a grasping section 33. The writing section 32 is fixed to the grasping section 33 so that the writing section 32 is perpendicular to a paper 20. An implement holding plate 36 through which light passes is provided about the writing section 32. The implement holding plate 36 includes a implement 35 which holds a tip 34. A writing means comprises the tip 34, implement 35 and the implement holding plate 36.

The writing section 32 includes a CCD area sensor 37 and a lens system 38 between the CCD area sensor 37 and the implement holding plate 36. A central axis of the tip 34 and an optical axis of the lens system 38 are coincident with one another. Further, the writing device for detecting handwriting includes a stress sensor 39 which is positioned close to the CCD area sensor 37, so that the stress sensor 39 detects whether or not the tip 34 is in contact with the writing surface or medium. A door section 33a is provided in the grasping section 33 in a openable and closeable manner.

In this writing device for detecting handwriting, the grasping section 33 is determined to be a suitable inclination condition for writing with respect to the writing section 32, when a writer grasps the grasping section 33 in a fashion similar to grasping a normal pen and writes, the writing section 32 is maintained perpendicular to the paper 20 wherein planes of the CCD area sensor 37 and the lens system 38 are parallel to the paper 20. Therefore handwriting can be accurately detected without image deformation.

### Third Embodiment

Fig. 7 is a cross sectional view of a main portion of a writing section of a writing device for detecting handwriting according to a third embodiment, while Fig. 8 is a cross sectional view of an upper portion of the writing device for detecting handwriting according to the third embodiment.

The writing device for detecting handwriting includes a case 41 having a cylindrical shape similar to a pencil shape. A writing section 41 a of the case 41 has an diameter enlarged to some degree. An implement holding plate 42, through which light passes, is provided in the writing section 41a. An implement 44 for holding a tip 43 is projected from the center of the implement holding plate 42. A writing means comprises the tip 43, implement holder 44 and the implement holding plate 42.

A telecentric lens 45 is provided as a telecentric lens system at an inner side of the implement holding plate 42. A CCD area sensor 46 is disposed at an inner edge portion of the telecentric lens 45. A handwriting detection means comprises the telecentric lens 45 and the CCD area sensor 46. Further, in Fig. 7, the telecentric lens 45 illustrated is merely exemplary and dose not schematically express the light path, and does not express an actual shape of the telecentric lens 45. In this embodiment, an optical axis of the telecentric lens 45 is coincident with a central axis of the tip 43 and the implement holder 44 (and a central axis of the case 41) and the CCD area sensor 46 is disposed on the optical axis. However, it is not necessary that the optical axis of the telecentric lens 45 is coincident with a central axis of the tip 43 and the implement holder 44. The optical axis and the central axis may be shifted to some degree from one another when a contact locus of the tip 43 (that is, a point of a handwriting which is obtained during writing) is positioned within a view for optical detection and the point of the handwriting is detected.

As is understood from Fig. 7, the implement holding plate 42, tip 43, implement holder 44, telecentric lens 45 and CCD area sensor 46 may be fixed in one body within an inner case 47, and the inner case 47 is slidable to some degree along the optical axis direction towards the inner side of the case 41 due to writing pressure during writing. When the inner case 47 moves towards the inner side of the case 41 along the optical axis direction due to the writing pressure during writing, stress sensors 49 are pressed by the inner case 47 so that the stress sensors 49 detect that writing is occurring. Further, it is possible that the inner case 47 has an arrangement for bending in a direction which is perpendicular to the optical axis (radially), and the stress sensors 49 disposed for detecting the bending of the inner case 47 so that the stress sensors 49 detect that writing is occuring.

Further, a printed circuit board 48 on which electrical circuits, including LSI, may be mounted, may be disposed within the case 41. The CCD area sensor 46 may be electically connected to the electrical circuits so that the handwriting signal detected by the CCD area sensor 46 is provided to the electical circuits. A memory for storing the detected handwriting information (not illustrated) and a battery (not illustrated) may be provided in a rear section 41 b of the case 41.

Furthermore, the stress sensors 49 for detecting that writing is occurring may be provided between the inner wall of the case 41 and the inner case 47. As is described above, when the inner case 47 may slidably move towards the inner side of the case 41 due to writing pressure during writing. The stress sensors 49 are pressed by the inner case 47 so that the stress sensors 49 detect, by the pressing force, that writing is occurring. A start switch 53 may be proviced at an outer position of the case 41 which position opposes at least one of the stress sensors 49. When the start switch 53 is operated, the power supply of the writing device for detecting handwriting is turned on or off.

When the writing device for detecting handwriting is used, the start switch 53 is pressed so that power supply of the writing device is turned on. The case 41 may then be inclined with respect to the paper 20 (ordinary writing condition), as illustrated in Fig.7, by grasping the case 41. Then characters, figures or the like may be written. The inner case 47 may slightly move towards the inner side of the case 41 by the writing pressure, and the stress sensors 49 detect that writing is occurring. The handwriting, that is the image on the paper 20, is received by the CCD area sensor 46 as light signals which are parallel to the optical axis through the telecentric lens 45 and are transformed into handwriting signals. The handwriting signals are compressed by thinning, or the like, by the electrical circuits and the compressed signals may be sequentially stored in memory. During writing, the leading edge of the tip 43 may separate from the paper 20 and move in space above the paper 20. The detection signals representative of whether the point of the tip 43 is moving in space or in contact with the paper 20 is output from the stress sensors 49 and stored in the memory with the handwriting detection signals. The detection signals representative of whether the point of the tip 43 is moving in space or in contact with the paper 20 are used for easy reproduction of the handwriting when the handwriting is reproduced by a handwriting reproducing section (for example, a computer) which is provided separately.

Fig. 9 is a cross sectional view of a main portion of a writing section of a modified example of the writing device for detecting handwriting which is illustrated in Fig. 7.

In the writing device for detecting handwriting, an LED 50 (light emitting diode) is provided on the printed circuit board 48 as an illuminating device for illuminating the paper 20. Plural optical fibers 51 are disposed uniformly about an outer face of the leading edge section 41 a of the case 41 (refer to Fig. 10), and one edge of these optical fibers 51 is connected to the LED 50 by an optical connecter 52. When the LED 50 is turned on, light radiated from the LED 50 is guided to the paper 20 through the optical fibers 51 so that the paper 20 is il- lumunated during writing. Therefore, handwriting can be detected even if writing is carried out under marginal light conditions or comparatively dark lighting conditions. A switch is preferably provided on the case 41 so as to control turning on or turning off of the LED 50.

Fig. 11 is a cross sectional view of a main portion of a writing section of a further modified writing device for detecting handwriting according to the third embodiment.

This writing device for detecting handwriting also includes an illuminating device. This writing device for detecting handwriting is different from the writing device for detecting handwriting illustrated in Fig. 9 in that the light radiated from the LED 50 mounted on the printed circuit board 48 passes through a halfmirror 54, and the telecentric lens 45, so that the paper 20 is illuminated, and so that the light reflected by the paper 20 passes through the telecentric lens 45, is reflected by the halfmirror 54 so that it is received by the CCD area sensor 46.

In the embodiments illustrated in Figs. 1, 6, 7, 9 and 11, when the handwriting detection section includes a zoom section for varying detection extent of the paper 20, detection area can be adjusted in size in correspondence to the size of handwriting, for example.

Further, when a correction section is used for correcting shifting of a positional relationship between the handwriting detection section (especially, optical elements such as CCD area sensor, and the like) and a surface of a writing medium, handwriting can successfully be detected regardless of differences between an individual person's grasping manner by correcting the difference by taking the orientation of the writing device into consideration. Otherwise, each of the the embodiments illustrated in Figs. 7, 9 and 11 employs the telecentric lens as the optical system, thereby handwriting under normal writing condition can be accurately detected. But, writing manner differs to some degree depending upon the individual, therefore handwriting detection accuracy varies to some degree depending upon writing manner when a same telecentric lens is used for several individuals. As is apparent from the foregoing, the correction section is useful in overcoming this problem.

The correction section is exemplified wherein image data on scaled paper (for example, 2 mm cross section paper) or image data obtained by maintaining the writing device in a vertical orientation relative to the scaled paper, or image data obtained by normally grasping the writing device so as to contact the writing device with the scaled paper, are stored. Pen angles (an angle of the writing device with respect to the horizontal direction and an angle of the writing device with respect to the vertical direction) are calculated based upon the deformation degree of the image obtained by a normal grasping position. Thereafter, image data is corrected based upon the obtained pen angles. The correction data (pen angles, for example) may be stored in a storing section (memory) provided within the writing device, or may be stored in an external storing device (reproducing apparatus such as a computer or the like).

Further, when a grasping position determining section for determining a positional relationship between the handwriting detection section (especially optical elements) and a surface of a writing medium when a writer grasps the writing device, the normal grasping orientation of the writing device can easily be recognized, therefore the writer can grasp the writing device in a correct direction. The grasping position determining section may be a grasping portion of the writing device, which grasping portion has a triangular cross section, and ordinary grasping fingers for grasping a pen (thumb, forefinger and middle finger) are assigned to each face of the grasping section. The grasping position determining section may have a marking provided at writing portion of the writing device, and a writer is concious of grasping condition so that the direction of the writing device is always set to a correct direction.

The writing device for detecting handwriting according to the present invention may have characteristic effects that a writer can easily write comparatively freely under his writing condition without being limited by the writing device, and handwriting such as characters, figures or the like can accurately be detected as image information without being influenced by characteristic deformation of a lens. Thereby, the writing device for detecting handwriting greatly enhances operation of a pen driven computing system.

When using the correction section for individual persons, variation in handwriting detection accuracy depending upon difference between individuals is eliminated or greatly suppressed. Therefore, handwriting detection accuracy is improved regardless of differences between individuals.

When the grasping position determining section is provided, the positional relationship between the handwriting detection section and the surface of the writing medium is determined. Therefore, the direction of the writing device is always set to a correct direction.

When an illuminating section is provided, handwriting is successfully detected and stored regardless of writing being carried out under poor light conditions or under comparatively dark light conditions. Writing is performed and handwriting is successfully detected and stored even when the paper is in dark light conditions which makes writing difficult.

## Claims

1. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43), said case (1, 31, 41) including a writing section (2, 32, 41a) in which said writing means (4, 34, 43) and said handwriting detection means (11, 12, 37, 38, 45, 46) are disposed, and a grasping section (3, 33) which grasping section (3, 33) is attached to said writing section (2, 32, 41a) in an inclinable manner.

2. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43),
said case (1, 31, 41) including a grasping section (3, 33) and a writing section (2, 32, 41a) in which said writing means (4, 34, 43) and said handwriting detection means (11, 12, 37, 38, 45, 46) are disposed, said writing section (2, 32, 41a) being attached to said grasping section (3, 33) so that said writing section (2, 32, 41a) is perpendicular to a surface (20) of a writing medium.

3. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43),
said handwriting detection means (11, 12, 37, 38, 45, 46) including one or more optical devices (12, 38, 45) for detecting an image on a surface (20) of a writing medium, said image being written on the surface (20) by said writing means (4, 34, 43), wherein a telecentric lens system (45) is provided for guiding the image on the surface to said optical devices (12, 38, 45).

4. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43),
said handwriting detection means (11, 12, 37, 38, 45, 46) including a zoom means for varying an extent for detecting an image on a writing surface (20) of a medium.

5. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43), said writing device comprising,
a correction means for correcting for shifting of positional relationship between said handwriting detection means (11, 12, 37, 38, 45, 46) and a writing surface (20).

6. A writing device as set forth in claim 5, wherein said correction means stores image data from a previously scaled paper or image data obtained by maintaining said writing device perpendicular to the scaled paper, and image data obtained from a normal grasping position of the writing device by a writer when said writing device contacts a surface of the scaled paper, and calculates pen angles based upon the deformation degree of the last image obtained from a normal grasping position of the writing device by the writer and corrects image data based upon the obtained pen angles.

7. A writing device as set forth in claim 6, further comprising a memory section which is provided within said writing device, wherein the pen angles are stored in said memory section.

8. A writing device as set forth in claim 6, wherein the pen angles are stored in an external memory device.

9. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43), said writing device comprising,
a grasping position determining means for determining a positional relationship between said handwriting detection means (11, 12, 37, 38, 45, 46) and a writing surface (20) when a writer grasps said writing device.

10. A writing device as set forth in claim 9, further comprising a grasping portion having a triangular shaped cross section.

11. A writing device as set forth in claim 9, further comprising a writing section, and wherein said grasping position determining means is a marking which is provided by said writing section of said writing device.

12. A writing device for detecting handwriting which includes within a case (1, 31, 41), a writing means (4, 34, 43) and a handwriting detection means (11, 12, 37, 38, 45, 46) for detecting characters, figures and the like written by said writing means (4, 34, 43), said writing device comprising,
an illuminating means (50, 51, 52) for illuminating a surface (20) of a writing medium.

13. A writing device as set forth in claim 12, wherein said illuminating means (50, 51, 52) includes a light emitting element (50) and optical fibers (51) for guiding and radiating the light from said light emitting element (50) on said surface (20) of said writing medium.

14. A writing device as set forth in claim 12, wherein said illuminating means (50, 51, 52) includes a light emitting element (50) and a lens system (45, 54) for guiding and radiating the light from said light emitting element (50) on said surface (20) of said writing medium and for guiding light reflected by the surface (20) to said handwriting detection means.

15. A writing device as set forth in one of claims 1, 2, 3, 4, 5, 9, 12 further comprising a memory means for storing handwriting information detected by said handwriting detection means (11, 12, 37, 38, 45, 46) and a power source.

16. A writing device as set forth in claim 15, wherein said memory means and said power source are removable.
